# EUROPEAN PATENT APPLICATION

(11) **EP 1 821 143 A1**
(43) Date of publication of application: **22.08.2007**
(21) Application number: 05790522.6
(22) Date of filing: 04.10.2005
(51) Int. Cl.: G03B 9/02, G03B 9/04, G03B 9/07

(54) **IMAGING DEVICE AND LIGHT INTENSITY ADJUSTING MECHANISM**

(30) Priority: 18.11.2004 JP 2004334419
(71) Applicant: Sony Corporation, Minato-ku Tokyo (JP)
(72) Inventor: TERAI, Takashi, Tokyo (JP)
(74) Representative: Nicholls, Michael John
(86) International application number: PCT/JP2005/018340
(87) International publication number: WO 2006/054400

(57) **Abstract**

An image-capturing apparatus and a quantity-of-light regulatory mechanism comprising: a pair of quantity-of-light regulatory blades (16, 17) for regulating quantity of light by opening or closing the optical path of an image-capturing optical system; a base article (26) having a transmission aperture (26a) serving as the optical path of the image-capturing optical system for movably supporting the pair of quantity-of-light regulatory blades; a turning arm (27) having engagement pins (27b, 27b) to be engaged with each of the pair of quantity-of-light regulatory blades slidably for moving abreast the pair of quantity-of-light regulatory blades; a driving motor (18) for turning the turning arm; and an auxiliary regulatory blade (23) for opening or closing the transmission aperture by being moved in the same direction as at least one of the pair of quantity-of-light regulatory blades; wherein at the time of obstructing operation of the transmission aperture the transmission aperture is obstructed in a state in which the area where the quantity-of-light regulatory blade moved in the same direction and the auxiliary regulatory blade are overlapped in the thickness direction gradually decreases; and wherein at the time of opening operation of the transmission aperture the transmission aperture is opened in a state in which the area where the quantity-of-light regulatory blade moved in the same direction and the auxiliary regulatory blade are overlapped in the thickness direction gradually increases.

## Description

### Technical Field

The present invention relates to the technical field regarding an image-capturing apparatus and a quantity-of-light regulatory mechanism, and particularly, relates to the technical field wherein in addition to quantity-of-light regulatory blades, there is provided an auxiliary regulatory blade for opening or closing a transmission aperture serving as the optical path of an image-capturing optical system, thereby realizing reduction in size regarding an image-capturing apparatus and a quantity-of-light regulatory mechanism.

### Background Art

Some image-capturing apparatuses such as video cameras, still cameras, and so forth include a quantity-of-light regulatory mechanism so as to perform quantity-of-light regulation by a pair of quantity-of-light regulatory blades (diaphragm blades) being moved abreast using the driving force of a driving motor within a plane orthogonal to the optical axis of an image-capturing optical system to open or close the optical path of the image-capturing optical system (see Japanese Unexamined Patent Application Publication No. 2001-272709, for example).

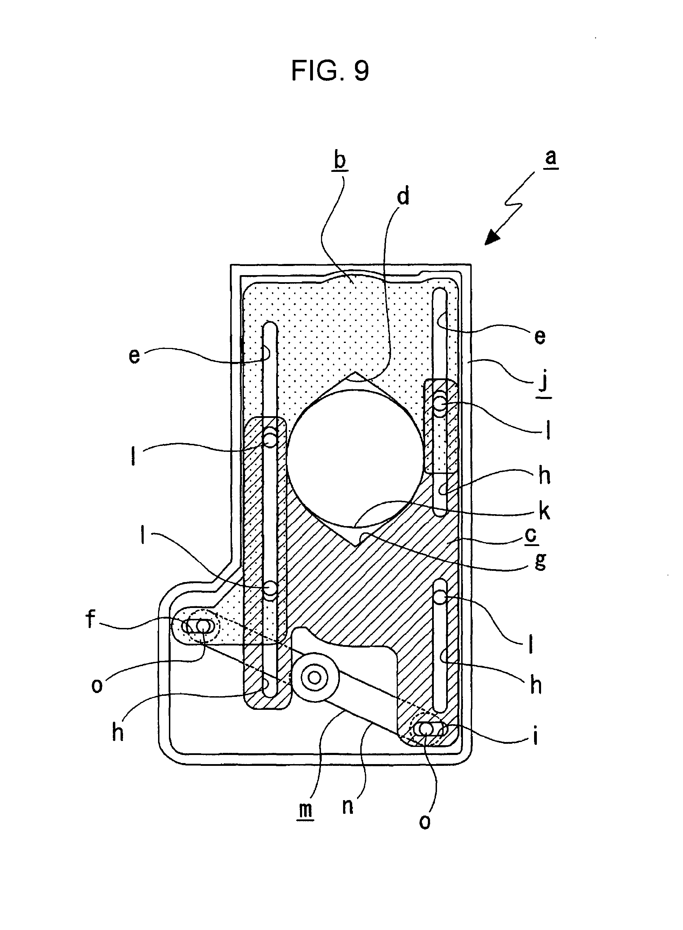

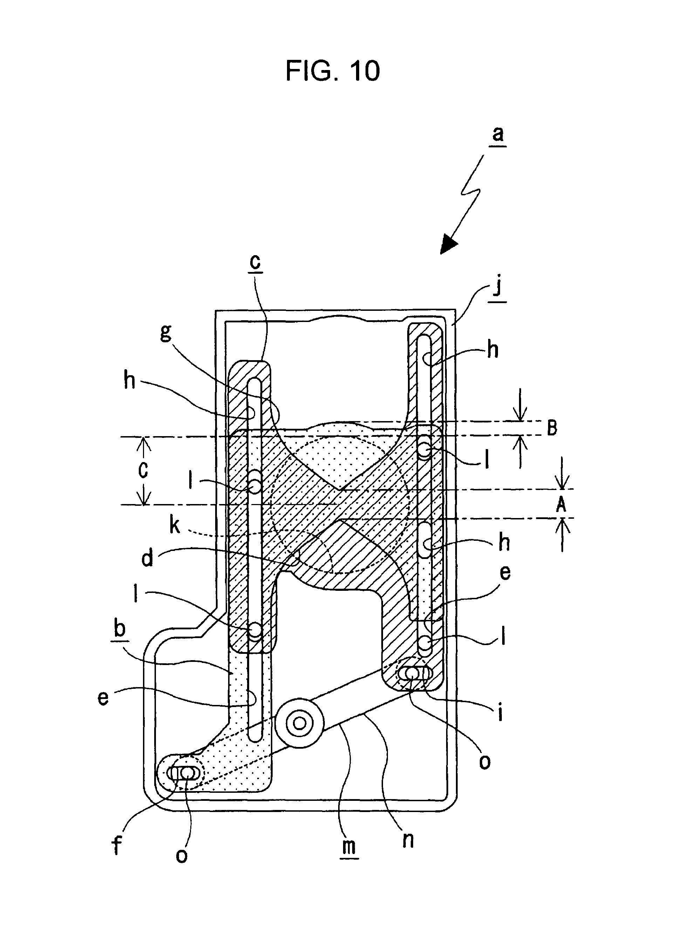

One example of an existing quantity-of-light regulatory mechanism provided in such an image-capturing apparatus will be shown below (see Fig. 9 and Fig. 10).

A quantity-of-light regulatory mechanism a includes quantity-of-light regulatory blades b and c serving as a pair of diaphragm blades, and regulation of incident light quantity is performed by the quantity-of-light regulatory blades b and c being moved abreast in the direction where both blades are mutually separated (vertical direction).

An opening notch d which is opened downward is formed in the quantity-of-light regulatory blade b, and vertically long guided holes e and e are formed at both left-and-right side edges thereof. A horizontally long sliding hole f is formed at the left and right of the quantity-of-light regulatory blade b.

An opening notch g which is opened upward is formed in the quantity-of-light regulatory blade c, and vertically long guided holes h and h are formed at both left-and-right side edges thereof. A horizontally long sliding hole i is formed at the left and right sides of the quantity-of-light regulatory blade c.

The quantity-of-light regulatory blades b and c are movably supported in the vertical direction by a base article j. The base article j is formed in a vertically long general rectangular shape, includes a transmission aperture k serving as the optical path of an image-capturing optical system at the general central portion thereof, and the optical axis of the optical system is set to the position passing through the center of the transmission aperture k.

The base article j is provided with four guide pins 1, 1, 1, and 1 which are protruding forward. The guide pins 1, 1, 1, and 1 are inserted in the guided holes e, e, h, and h of each of the quantity-of-light regulatory blades b and c, and are slidably engaged therewith.

An unshown driving motor is disposed behind the base article j, the motor shaft of the driving motor passes through the base article j, and a turning arm m is fixed to the motor shaft.

The turning arm m is made up of an arm portion n, and engaging pins o and o protruding from both edge portions of the arm portion n. With the arm portion n, the central portion in the longitudinal direction is fixed to the motor shaft. The engaging pins o and o of the turning arm m are each engaged with the sliding holes f and i of the quantity-of-light regulatory blades b and c in a slidable manner.

Upon the turning arm m being turned along with the rotation of the driving motor, the engaging pins o and o of the turning arm m slide as to the sliding holes f and i of the quantity-of-light regulatory blades b and c respectively, and the quantity-of-light regulatory blades b and c are guided to the guide pins 1, 1, 1, and 1, and are moved abreast in the direction where both blades are mutually separated (vertical direction).

At this time, upon the driving motor being rotated in one direction, as shown in Fig. 9, the quantity-of-light regulatory blades b and c are moved in the direction where both blades are mutually separated, the area of an opening formed by the opening notches d and g of the quantity-of-light regulatory blades b and c becomes great, and the transmission aperture k is opened, thereby increasing the incident light quantity. Inversely, upon the turning arm m being rotated in the other direction, as shown in Fig. 10, the quantity-of-light regulatory blades b and c are moved in the direction where both blades approach, the area of the opening formed by the opening notches d and g of the quantity-of-light regulatory blades b and c becomes small, and the transmission aperture k is obstructed, thereby decreasing the incident light quantity.

Accordingly, as for light transmitting the transmission aperture k of the base article j, quantity-of-light regulation is performed depending on the size of the opening formed by the opening notches d and g of the quantity-of-light regulatory blades b and c.

### Disclosure of Invention

Incidentally, with the quantity-of-light regulatory mechanism a configured with such a pair of quantity-of-light regulatory blades b and c, in order to secure sure shielding performance even in the case in which an error occurs at the time of assembling the respective components, an overlapping portion A (see Fig. 10) is arranged to be formed at the time of the transmission aperture k being obstructed by the quantity-of-light regulatory blades b and c. Also, there is a case in which the quantity-of-light regulatory mechanism a is employed as a shutter at the time of photographing a still image, and in this case, operation for closing the quantity-of-light regulatory blades b and c at high speed is performed, and in order to prevent re-exposure which may occur at this time due to rebounding, which is a transition from the obstructed state to the opened state of the quantity-of-light regulatory blades b and c as well, the above-mentioned overlapping portion A is required.

Also, at the time of opening the transmission aperture k, the quantity-of-light regulatory blades b and c need to be evacuated outside the transmission aperture k, but this evacuated position is determined in light of an error at the time of assembly, so it is necessary to provide a margin B equivalent to an assembly error (see Fig. 10).

Accordingly, with the quantity-of-light regulatory blades b and c, it is necessary to provide the length of the half of the overlapping portion A + the margin B equivalent to an assembly error + the radius C of the transmission aperture k in the movement direction outside the opening notches d and g, which causes a problem wherein the quantity-of-light regulatory mechanism a becomes large in size equivalent to that length.

In the event of building such a quantity-of-light regulatory mechanism a into the lens barrel, the quantity-of-light regulatory mechanism a becomes large in size, so that a part thereof is protruding outside from the lens barrel in many cases, and consequently, reduction in size of an image-capturing apparatus in which a lens barrel is disposed, such as a video camera, a still camera, and the like is prevented.

Additionally, the respective components such as a strobe, a microphone, an auto-focusing fill-in light luminescent device, and so forth are disposed around the quantity-of-light regulatory mechanism a in the image-capturing apparatus for the sake of design in many cases, but these components and a part of the quantity-of-light regulatory mechanism a protruding from the lens barrel interfere positionally, and there is a possibility that the flexibility in layout of the components may be prevented, and the flexibility on a design and a function may be prevented.

Also, in the event that a part of the quantity-of-light regulatory mechanism a is protruding from the lens barrel, an opportunity to receive unexpected external force increases at the time of handling the lens unit including the lens barrel, and there is a possibility that this external force causes the malfunction of the quantity-of-light regulatory mechanism a.

To this end, an object of the present invention is to overcome the above-mentioned problems, and to realize reduction in size of an image-capturing apparatus and a quantity-of-light regulatory mechanism.

An image-capturing apparatus according to the present invention, in order to solve the above-mentioned problems, comprises: a lens barrel inside which an image-capturing optical system is disposed; a pair of quantity-of-light regulatory blades, which are moved abreast in the direction where both blades are mutually separated to open or close a transmission aperture serving as the optical path of the image-capturing optical system, for regulating quantity of light; a base article having the transmission aperture serving as the optical path of the image-capturing optical system for movably supporting the pair of quantity-of-light regulatory blades; a turning arm having an engagement pin to be engaged with each of the pair of quantity-of-light regulatory blades slidably for subjecting the pair of quantity-of-light regulatory blades to translational movement by being subjected to turning operation; a driving motor serving as a driving source for turning the turning arm; and an auxiliary regulatory blade for opening or closing the transmission aperture by being moved in the same direction as at least one of the pair of quantity-of-light regulatory blades; wherein at the time of obstructing operation of the transmission aperture the transmission aperture is obstructed in a state in which the area where the quantity-of-light regulatory blade moved in the same direction and the auxiliary regulatory blade are overlapped in the thickness direction gradually decreases; and wherein at the time of opening operation of the transmission aperture the transmission aperture is opened in a state in which the area where the quantity-of-light regulatory blade moved in the same direction and the auxiliary regulatory blade are overlapped in the thickness direction gradually increases.

A quantity-of-light regulatory mechanism according to the present invention, in order to solve the above-mentioned problems, comprises: a pair of quantity-of-light regulatory blades, which are moved abreast in the direction where both blades are mutually separated to open or close a transmission aperture serving as the optical path of the image-capturing optical system which is disposed inside a lens barrel, for regulating quantity of light; a base article having the transmission aperture serving as the optical path of the image-capturing optical system for movably supporting the pair of quantity-of-light regulatory blades; a turning arm having an engagement pin to be engaged with each of the pair of quantity-of-light regulatory blades slidably for subjecting the pair of quantity-of-light regulatory blades to translational movement by being subjected to turning operation; a driving motor serving as a driving source for turning the turning arm; and an auxiliary regulatory blade for opening or closing the transmission aperture by being moved in the same direction as at least one of the pair of quantity-of-light regulatory blades; wherein at the time of obstructing operation of the transmission aperture the transmission aperture is obstructed in a state in which the area where the quantity-of-light regulatory blade moved in the same direction and the auxiliary regulatory blade are overlapped in the thickness direction gradually decreases; and wherein at the time of opening operation of the transmission aperture the transmission aperture is opened in a state in which the area where the quantity-of-light regulatory blade moved in the same direction and the auxiliary regulatory blade are overlapped in the thickness direction gradually increases.

Therefore, with the image-capturing apparatus and quantity-of-light regulatory mechanism according to the present invention, the transmission aperture serving as the optical path of the image-capturing optical system is obstructed by the pair of quantity-of-light regulatory blades and the auxiliary regulatory blade, and the quantity-of-light regulatory blade and the auxiliary regulatory blade moved in the same direction at the time of obstructing the transmission aperture are positioned in an overlapped state.

### Brief Description of the Drawings

Fig. 1 illustrates a preferred embodiment of the present invention along with Fig. 2 through Fig. 8, and the present figure is a conceptual diagram illustrating the basic configuration of an image-capturing apparatus.
Fig. 2 is an exploded perspective view of a quantity-of-light regulatory mechanism.
Fig. 3 is an enlarged front view illustrating a state in which one of quality-of-light regulatory blades is supported by a base article.
Fig. 4 is an enlarged front view illustrating a state in which the other quality-of-light regulatory blade is supported by the base article.
Fig. 5 is an enlarged front view illustrating a state in which an auxiliary regulatory blade is supported by the base article.
Fig. 6 illustrates the operation of the quantity-of-light regulatory mechanism along with Fig. 2 through Fig. 8, and the present figure is an enlarged front view illustrating an opened state.
Fig. 7 is an enlarged front view illustrating a state in the middle of operation.
Fig. 8 is an enlarged front view illustrating a obstructed state.
Fig. 9 illustrates an existing quantity-of-light regulatory mechanism along with Fig. 10, and the present figure is an enlarged front view illustrating a state in which a transmission aperture is opened.
Fig. 10 is an enlarged front view illustrating a state in which the transmission aperture is obstructed.

### Best Mode for Carrying Out the Invention

Description will be made below regarding the best mode for carrying out the image-capturing apparatus and quality-of-light regulatory mechanism according to the present invention with reference to the appended drawings. With the best mode illustrating below, the image-capturing apparatus according to the present invention is applied to a still camera, and the quantity-of-light regulatory mechanism according to the present invention is applied to the quantity-of-light regulatory mechanism employed for this still camera. Note that the scope of the present invention is not restricted to the still camera, or the mechanism employed for the still camera, so the present invention can be applied to various types of image-capturing apparatus including a function of moving-image photography or still- image photography, or the various types of quantity-of-light regulatory mechanism employed for these image-capturing apparatuses.

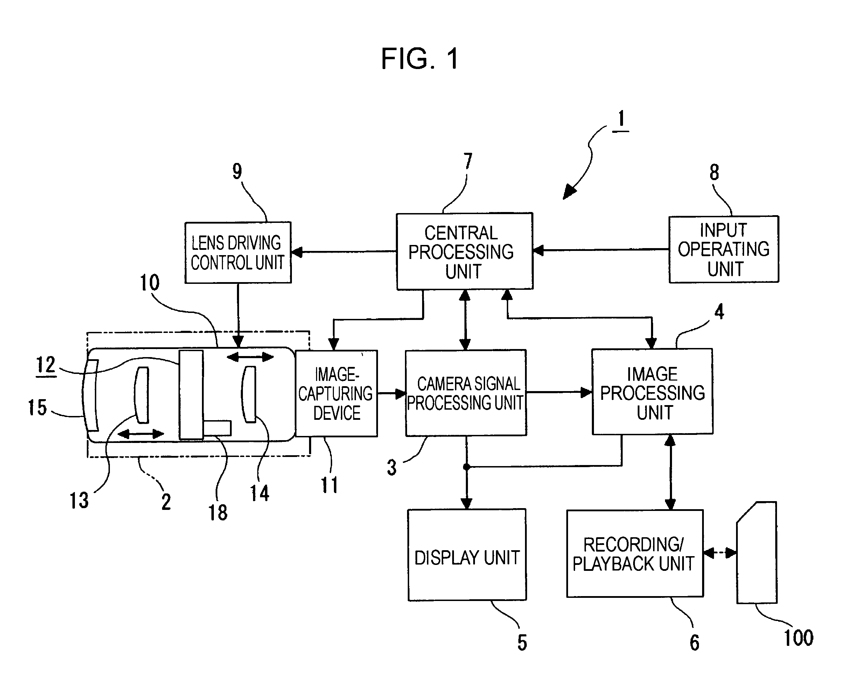

An image-capturing apparatus 1 (digital still camera) includes, as shown in Fig. 1, a camera block 2 including an image-capturing function, a camera signal processing unit 3 for subjecting a photographed image signal to signal processing such as analog-to-digital conversion or the like, an image processing unit 4 for subjecting an image signal to recording/playback processing, a display unit 5 for displaying a photographed image or the like, a recording/playback unit 6 for subjecting a recording medium 100 to recording/playback, a central processing unit 7 for controlling the whole of the image-capturing apparatus 1, an input operating unit 8 for performing operating input by a user, and a lens driving control unit 9 for controlling driving of various types of lens of the camera block 2.

The camera block 2 is made up of a lens barrel 10, an image-capturing optical system such as respective lenses or the like and an image-capturing device 11 such as a CCD (Charge Coupled Device) or the like which are disposed within the lens barrel 10.

The camera signal processing unit 3 subjects the output signal (analog signal) from the image-capturing device 11 to signal processing such as conversion into a digital signal, removal of noise, correction of image quality, conversion into a luminance signal or a color-difference signal, or the like.

The image processing unit 4 performs compression encoding of an image signal based on a predetermined image data format, decompression decoding processing, conversion processing of data specifications such as resolution, or the like.

The recording medium 100 is detachable semiconductor memory, for example.

The display unit 5 is a liquid crystal display, for example.

The recording/playback unit 6 performs writing of image data encoded by the image processing unit 4 into the recording medium 100, or readout of the image data recorded in the recording medium 100.

The central processing unit 7 is a control processing unit for controlling each of the circuit blocks provided in the image-capturing apparatus 1, and controls each of the circuit blocks based on the instruction input signal or the like from the input operating unit 8.

The input operating unit 8 is made up of, for example, a shutter release button for performing shutter operation, a selection switch for selecting an operation mode, and so forth, and outputs the instruction input signal corresponding to an operation by a user to the central processing unit 7.

The lens driving control unit 9 controls the respective lenses disposed within the lens barrel 10 based on the control signal from the central processing unit 7, and for example, controls an unshown motor for driving a laterdescribed variable power lens for zooming, or a laterdescribed focusing lens for focusing, and so forth.

The operation of the image-capturing apparatus 1 will be described below briefly.

With a photographing standby state, under the control of the central processing unit 7, the image signal photographed at the camera block 2 is output to the display unit 5 via the camera signal processing unit 3, where that signal is displayed as a camera through image.

Upon the instruction input signal for zooming being input from the input operating unit 8, the central processing unit 7 outputs a control signal to the lens driving control unit 9, where the variable power lens disposed in the lens barrel 10 is moved based on the control of the lens driving control unit 9.

Focusing is performed by the lens driving control unit 9 moving the focusing lens within the lens barrel 10 based on the control signal from the central processing unit 7 in the case of the shutter release button being half-pressed, or in the case of being full-pressed for recording, for example.

Upon the unshown shutter of the camera block 2 being operated by the instruction input signal from the input operating unit 8, an image signal is output from the camera signal processing unit 3 to the image processing unit 4, where that signal is subjected to compression encoding processing, and is converted into digital data in a predetermined format. The converted data is output to the recording/playback unit 6, and is written in the recording medium 100.

In the event of playing the image data recorded in the recording medium 100, in response to the operation by the input operating unit 8, predetermined image data is read out from the recording medium 100 by the recording/playback unit 6, and is subjected to decompression decoding processing at the image processing unit 4, following which the playback image signal is output to the display unit 5. Thus, the playback image is displayed.

Next, description will be made regarding a configuration example of the camera block 2 (see Fig. 1).

A quantity-of-light regulatory mechanism 12 is disposed in the lens barrel 10 of the camera block 2, a variable power lens 13 and a focusing lens 14 are each disposed at the position of the opposite side in the optical axial direction sandwiching the quantity-of-light regulatory mechanism 12 in a movable state in the optical axial direction. A lens 15 is disposed at the front end portion of the lens barrel 10.

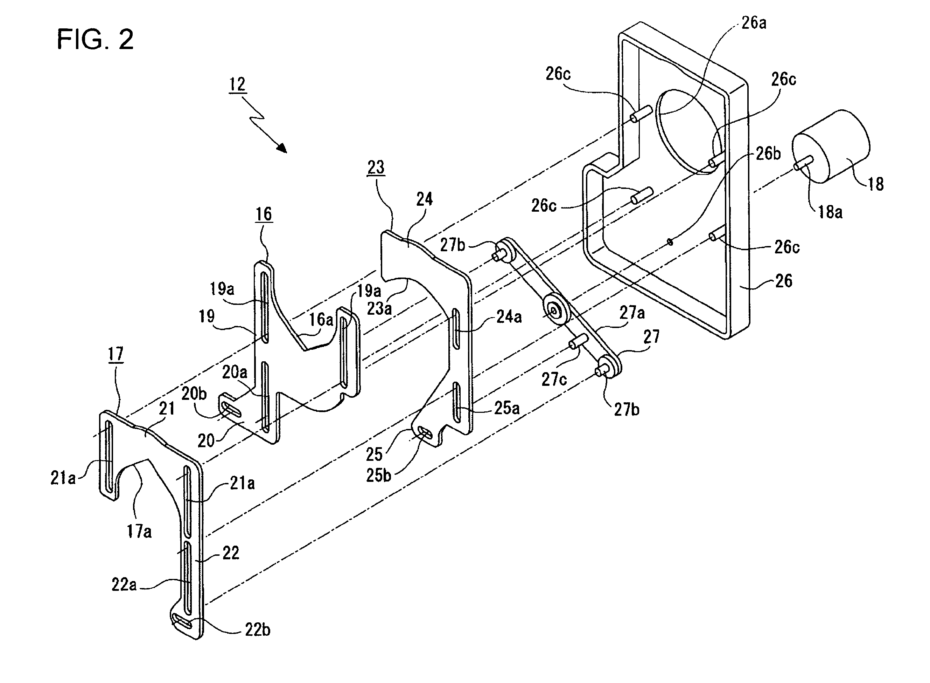

The quantity-of-light regulatory mechanism 12 includes, as shown in Fig. 2, quantity-of-light regulatory blades 16 and 17 serving as a pair of diaphragm blades, and the quantity-of-light regulatory blades 16 and 17 are moved abreast in the direction where both blades are mutually separated (vertical direction), thereby performing regulation of incident light quantity. The quantity-of-light regulatory blades 16 and 17 are moved abreast by the driving force of the driving motor 18.

The quantity-of-light regulatory blade 16 is formed by a principal portion 19 and a protruding portion 20 protruding downward from the left end portion of the principal portion 19 being formed integrally. An opening notch 16a opening upward is formed in the quantity-of-light regulatory blade 16.

At both left-and-right side edges of the principal portion 19 vertically long guided holes 19a and 19a are formed respectively, and the opening notch 16a is formed between the guided holes 19a and 19a.

A vertically long guided hole 20a is formed in the protruding portion 20. At the lower end portion of the protruding portion 20 a horizontally long sliding hole 20b is formed.

The quantity-of-light regulatory blade 17 is formed by a principal portion 21 and a protruding portion 22 protruding downward from one of the side edge portions of the principal portion 21 being formed integrally. An opening notch 17a opening downward is formed in the quantity-of-light regulatory blade 17.

At both left-and-right side edges of the principal portion 21 vertically long guided holes 21a and 21a are formed respectively.

A vertically long guided hole 22a is formed in the protruding portion 22. At the lower end portion of the protruding portion 22 a horizontally long sliding hole 22b is formed.

The quantity-of-light regulatory mechanism 12 includes, as shown in Fig. 2, an auxiliary regulatory blade 23. The auxiliary regulatory blade 23 is moved abreast in the same direction as the quantity-of-light regulatory blade 17 by the driving force of the driving motor 18.

The auxiliary regulatory blade 23 is formed by a principal portion 24 and a protruding portion 25 protruding downward from one of the side edge portions of the principal portion 24 being formed integrally. An opening notch 23a opening downward is formed in the auxiliary regulatory blade 23. With the principal portion 24, at one of the side edges a vertically long guided hole 24a is formed.

A vertically long guided hole 25a is formed in the protruding portion 25. At the lower end portion of the protruding portion 25 a horizontally long sliding hole 25b is formed.

The quantity-of-light regulatory blades 16 and 17 and the auxiliary regulatory blade 23 are each supported movably in the vertical direction by a base article 26 (see Fig. 2 through Fig. 5).

The base article 26 is formed in a vertically long general rectangular shape, includes a transmission aperture 26a serving as the optical path of an image-capturing optical system at the general central portion thereof, and the optical axis of the optical system is set to the position passing through the center of the transmission aperture 26a. An axial insertion hole 26b is formed at the position close to the lower end of the base article 26. The base article 26 is provided with four guide pins 26c, 26c, 26c, and 26c, which are isolated vertically and horizontally, protruding forward.

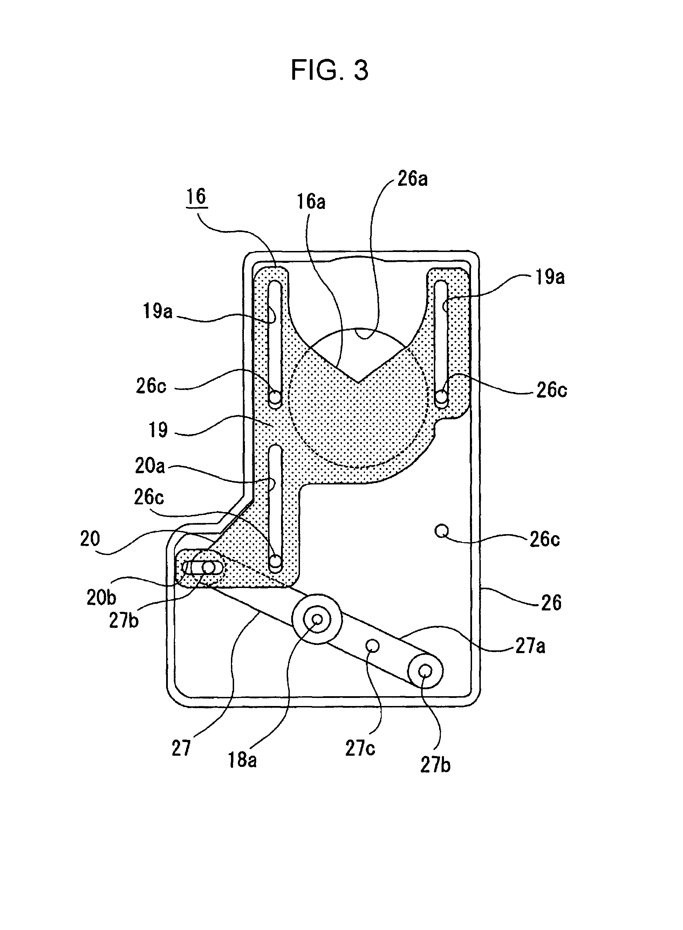

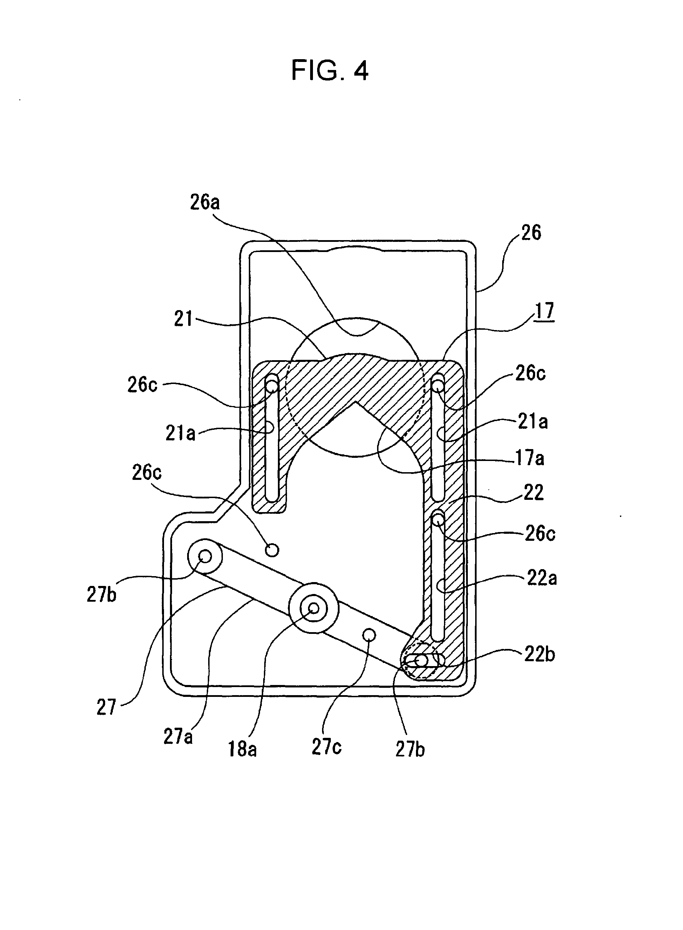

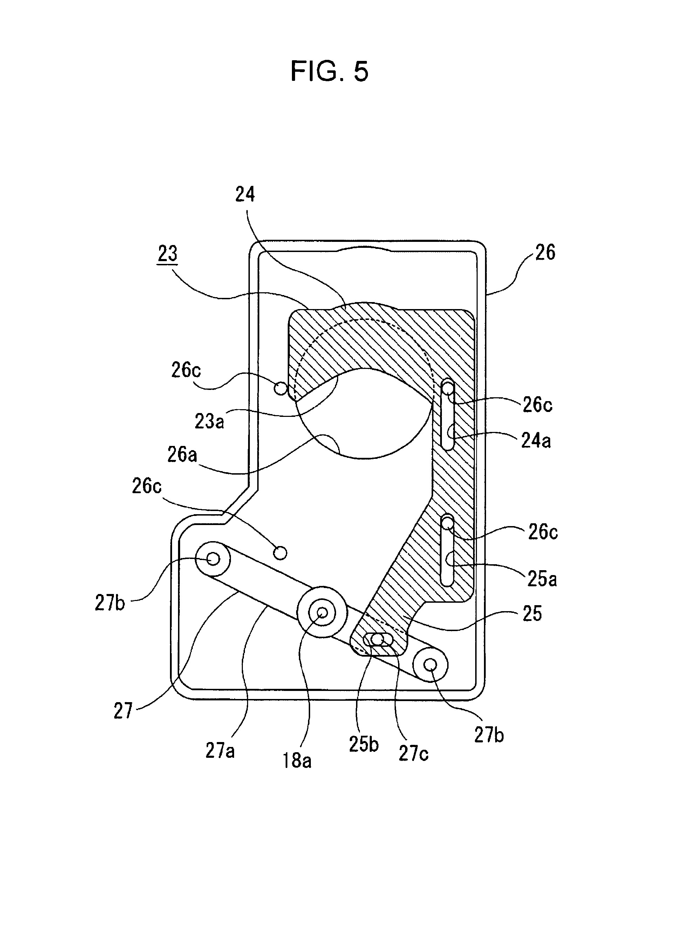

The three guide pins 26c, 26c, and 26c of the base article 26 are, as shown in Fig. 3, inserted in the guided holes 19a, 19a, and 20a of the quantity-of-light regulatory blade 16, and are slidably engaged therewith respectively. Also, the three guide pins 26c, 26c, and 26c of the base article 26 are, are shown in Fig. 4, inserted in the guided holes 21a, 21a, and 22a of the quantity-of-light regulatory blade 17, and are slidably engaged therewith respectively. Further, the two guide pins 26c and 26c of the base article 26 are, are shown in Fig. 5, inserted in the guided holes 24a and 25a of the auxiliary regulatory blade 23, and are slidably engaged therewith respectively.

That is to say, the first guide pin 26c is engaged with the guided hole 19a of the quantity-of-light regulatory blade 16 and the guided hole 21a of the quantity-of-light regulatory blade 17, the second guide pin 26c is engaged with the guided hole 19a of the quantity-of-light regulatory blade 16, the guided hole 21a of the quantity-of-light regulatory blade 17, and the guided hole 24a of the auxiliary regulatory blade 23, the third guide pin 26c is engaged with the guided hole 22a of the quantity-of-light regulatory blade 17, and the guided hole 25a of the auxiliary regulatory blade 23, and the fourth guide pin 26c is engaged with only the guided hole 20a of the quantity-of-light regulatory blade 16.

An unshown cover article which obstructs the quantity-of-light regulatory blades 16 and 17, and the auxiliary regulatory blade 23 is attached to the base article 26 in a state in which the quantity-of-light regulatory blades 16 and 17, and the auxiliary regulatory blade 23 are supported by the base article 26. An opening portion positioned corresponding to the transmission aperture 26a of the base article 26 is formed in the cover article.

The driving motor 18 is disposed behind the base article 26 (see Fig. 2). With the driving motor 18, the motor shaft 18a is disposed in the direction extending forward and backward. The motor shaft 18a of the driving motor 18 passes through the axial insertion hole 26b of the base article 26.

A turning arm 27 is fixed to the motor shaft 18a of the driving motor 18. The turning arm 27 is made up of an arm portion 27a, engaging pins 27b and 27b protruding from both end portions in the longitudinal direction of the arm portion 27a, and an engaging protruding portion 27c protruding from the intermediate portion in the longitudinal direction of the arm portion 27a. The engaging protruding portion 27c is provided at the position between the turning supporting point of the turning arm 27 and one of the engaging pins 27b, and the distance from the turning supporting point to the engaging protruding portion 27c is set to 1/2 of the distance from the turning supporting point to the engaging pin 27b, for example.

The engaging pins 27b and 27b of the turning arm 27 are slidably engaged with the sliding holes 20b and 22b of the quantity-of-light regulatory blades 16 and 17 respectively. The engaging protruding portion 27c of the turning arm 27 is slidably engaged with the sliding hole 25b of the auxiliary regulatory blade 23.

As described above, with the turning arm 27, the distance from the turning supporting point to the engaging protruding portion 27c is set to 1/2 of the distance from the turning supporting point to the engaging pin 27b, so the amount of movement of the auxiliary regulatory blade 23 at the time of the turning arm 27 being turned is 1/2 of the amount of movement of the quantity-of-light regulatory blade 17.

Note that it is not always necessary to set the amount of movement of the auxiliary regulatory blade 23 to 1/2 of the amount of movement of the quantity-of-light regulatory blade 17, and it is possible to arbitrarily set the ratio between the amount of movement of the auxiliary regulatory blade 23 and the amount of movement of the quantity-of-light regulatory blade 17 by arbitrarily setting the ratio between the distance from the turning supporting point to the engaging protruding portion 27c and the distance from the turning supporting point to the engaging pin 27b.

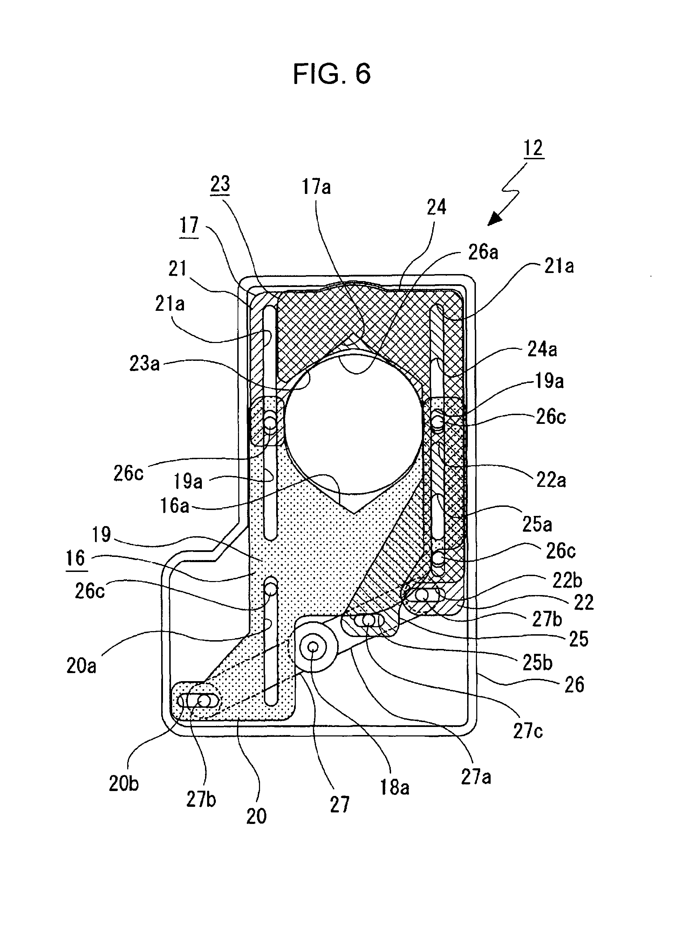

Description will be made below regarding operation of the quantity-of-light regulatory blades 16 and 17 and the auxiliary regulatory blade 23 along with the rotation of the driving motor 18 (see Fig. 6 through Fig. 8).

Upon the turning arm 27 being turned along with the rotation of the driving motor 18, the engaging pins 27b and 27b of the turning arm 27 are slid to the sliding holes 20b and 22b of the quantity-of-light regulatory blades 16 and 17 respectively, whereby the quantity-of-light regulatory blades 16 and 17 are guided to the guide pins 26c, 26c, 26c, and 26c, and are moved abreast in the direction where both blades are mutually separated (vertical direction). At the same time, the engaging protruding portion 27c of the turning arm 27 is slid to the sliding hole 25b of the auxiliary regulatory blade 23, whereby the auxiliary regulatory blade 23 is guided to the guide pins 26c and 26c, and is moved abreast in the same direction as the quantity-of-light regulatory blade 17.

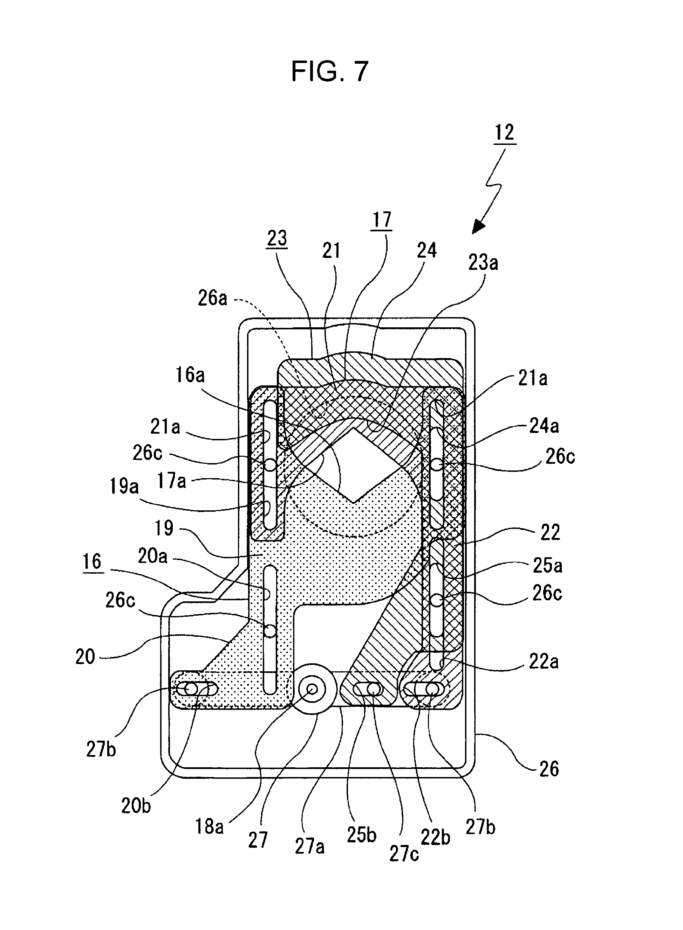

At this time, upon the driving motor 18 being rotated in one direction, from the opened state in which the transmission aperture 26a is opened shown in Fig. 6, the quantity-of-light regulatory blade 16 is moved upward, and also the quantity-of-light regulatory blade 17 and the auxiliary regulatory blade 23 are moved downward, the area of an opening formed by the opening notches 16a and 17a of the quantity-of-light regulatory blades 16 and 17 becomes small, and the transmission aperture 26a is obstructed, whereby incident light quantity gradually decreases (see Fig. 7).

With the opened state, the positional relation between the principal portion 21 of the quantity-of-light regulatory blade 17 and the principal portion 24 of the auxiliary regulatory blade 23 is arranged so as to be overlapped in the thickness direction, and as described above, the amount of movement of the auxiliary regulatory blade 23 is set to 1/2 of the amount of movement of the quantity-of-light regulatory blade 17, so along with the above-mentioned movement from the opened state, the opened state is changed to a state wherein the area where the principal portion 21 of the quantity-of-light regulatory blade 17 and the principal portion 24 of the auxiliary regulatory blade 23 are overlapped in the thickness direction gradually decreases.

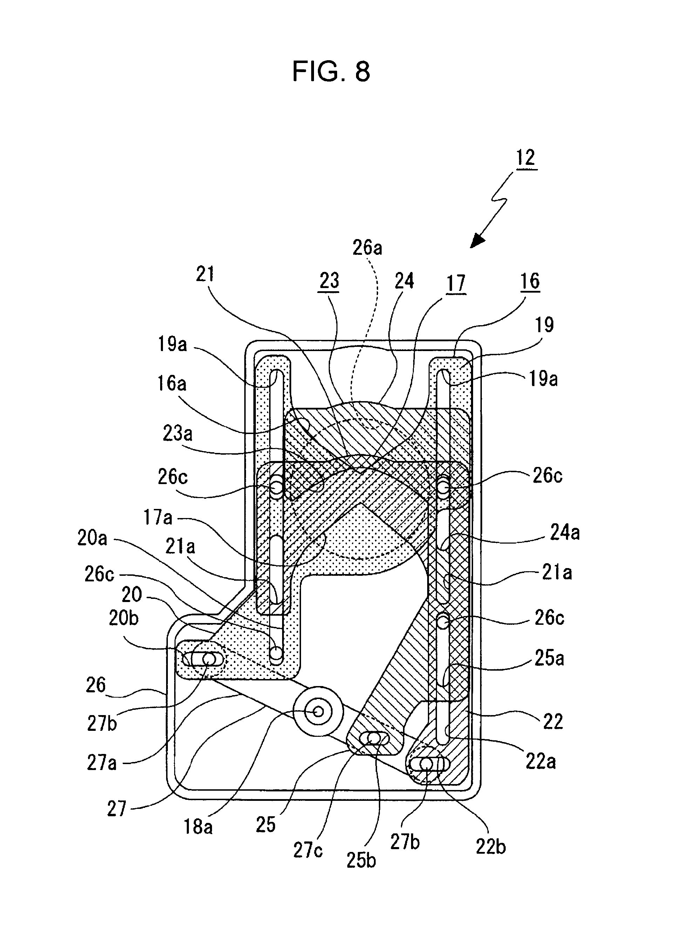

Further, upon the driving motor 18 being rotated in one direction, from the state shown in Fig. 7, the quantity-of-light regulatory blade 16 is moved upward, and also the quantity-of-light regulatory blade 17 and the auxiliary regulatory blade 23 are moved downward, the area of an opening formed by the opening notches 16a and 17a of the quantity-of-light regulatory blades 16 and 17 becomes small, and the transmission aperture 26a is obstructed, whereby incident light quantity gradually decreases, resulting in the obstructed state in which the transmission aperture 26a is obstructed (see Fig. 8).

With the process reaching this obstructed state as well, the state shown in Fig. 7 is changed to a state wherein the area where the principal portion 21 of the quantity-of-light regulatory blade 17 and the principal portion 24 of the auxiliary regulatory blade 23 are overlapped in the thickness direction gradually decreases.

With the obstructed state in which the transmission aperture 26a is obstructed, as shown in Fig. 8, the transmission aperture 26a is obstructed by the principal portion 19 of the quantity-of-light regulatory blade 16, the principal portion 21 of the quantity-of-light regulatory blade 17, and the principal portion 24 of the auxiliary regulatory blade 23.

Inversely, upon the driving motor 18 being rotated in the other direction, from the obstructed state in which the transmission aperture 26a is obstructed shown in Fig. 8, the quantity-of-light regulatory blade 16 is moved downward, and also the quantity-of-light regulatory blade 17 and the auxiliary regulatory blade 23 are moved upward, the area of an opening formed by the opening notches 16a and 17a of the quantity-of-light regulatory blades 16 and 17 becomes great, and the transmission aperture 26a is opened, whereby incident light quantity gradually increases, resulting in the opened state shown in Fig. 6 from the state shown in Fig. 7.

When resulting in the opened state from the obstructed state, along with the movement of the quantity-of-light regulatory blade 17 and the auxiliary regulatory blade 23, the obstructed state is changed to a state wherein the area where the principal portion 21 of the quantity-of-light regulatory blade 17 and the principal portion 24 of the auxiliary regulatory blade 23 are overlapped in the thickness direction gradually increases.

As described above, with the image-capturing apparatus 1, there is provided the auxiliary regulatory blade 23 which is moved in the same direction as the quantity-of-light regulatory blade 17 to open or close the transmission aperture 26a, at the time of obstructing operation to obstruct the transmission aperture 26a, the opened state is arranged to be changed to a state wherein the area where the principal portion 21 of the quantity-of-light regulatory blade 17 and the principal portion 24 of the auxiliary regulatory blade 23 are overlapped in the thickness direction gradually decreases, and at the time of opening operation to open the transmission aperture 26a, the obstructed state is arranged to be changed to a state wherein the area where the principal portion 21 of the quantity-of-light regulatory blade 17 and the principal portion 24 of the auxiliary regulatory blade 23 are overlapped in the thickness direction gradually increases. Therefore, the length in the movement direction of the quantity-of-light regulatory blade 17 and the auxiliary regulatory blade 23 can be reduced as compared with the case in which the transmission aperture 26a is arranged to be opened or closed only by the quantity-of-light regulatory blade 16 and the quantity-of-light regulatory blade 17, and accordingly, the quantity-of-light regulatory mechanism 12 can be reduced in size equivalent to that reduced length.

Also, reduction in size regarding the quantity-of-light regulatory mechanism 12 can be realized, so the quantity-of-light regulatory mechanism 12 can be readily disposed as to the lens barrel 10 so as to not protrude outside, and interference regarding the layout as to other components can be avoided, whereby the flexibility of layout of the respective components to be disposed around the lens barrel 10 can be improved.

Further, the quantity-of-light regulatory mechanism 12 can be readily disposed as to the lens barrel 10 so as to not protrude outside, so with the quantity-of-light regulatory mechanism 12, an opportunity to receive unexpected external force decreases, and accordingly, the malfunction of the quantity-of-light regulatory mechanism 12 due to this external force can be prevented.

Additionally, the turning arm 27 is provided with the engaging pins 27b and 27b, and the engaging protruding portion 27c, and the quantity-of-light regulatory blades 16 and 17, and the auxiliary regulatory blade 23 are operated by the single driving motor 18, whereby the number of components can be reduced accordingly, and also further reduction in size due to reduction in layout space can be realized.

Note that with the above description, the auxiliary regulatory blade 23 which moves in the same direction as the quantity-of-light regulatory blade 17 has been shown as an example, but instead of this, an auxiliary regulatory blade which moves in the same direction as the quantity-of-light regulatory blade 16 may be provided, or both an auxiliary regulatory blade which moves in the same direction as the quantity-of-light regulatory blade 16 and an auxiliary regulatory blade which moves in the same direction as the quantity-of-light regulatory blade 17 may be provided. In the case of providing an auxiliary regulatory blade which moves in the same direction as the quantity-of-light regulatory blade 16, the length in the movement direction of the quantity-of-light regulatory blade 16 can be reduced.

Also, the number of auxiliary regulatory blades to be provided is arbitrarily, so there are provided a plurality of auxiliary regulatory blades having the different amount of movement to be moved in the same direction, whereby further reduction in size regarding the quantity-of-light regulatory mechanism can be realized.

Further, the driving mechanism for operating the quantity-of-light regulatory blades 16 and 17, and the driving mechanism for operating the auxiliary regulatory blade may be provided separately.

Note that the vertical and horizontal directions shown in the above description are for the sake of convenience in explanation, the present invention is not restricted to these directions.

The specific shapes and configurations of the respective components which have been shown in the above-mentioned best mode are only one specific example at the time of carrying out the present invention, and the technical scope of the present invention is not to be restrictively interpreted by these.

The image-capturing apparatus according to the present invention comprises: a lens barrel inside which an image-capturing optical system is disposed; a pair of quantity-of-light regulatory blades, which are moved abreast in the direction where both blades are mutually separated to open or close a transmission aperture serving as the optical path of the image-capturing optical system, for regulating quantity of light; a base article having the transmission aperture serving as the optical path of the image-capturing optical system for movably supporting the pair of quantity-of-light regulatory blades; a turning arm having an engagement pin to be engaged with each of the pair of quantity-of-light regulatory blades slidably for subjecting the pair of quantity-of-light regulatory blades to translational movement by being subjected to turning operation; a driving motor serving as a driving source for turning the turning arm; and an auxiliary regulatory blade for opening or closing the transmission aperture by being moved in the same direction as at least one of the pair of quantity-of-light regulatory blades; wherein at the time of obstructing operation of the transmission aperture the transmission aperture is obstructed in a state in which the area where the quantity-of-light regulatory blade moved in the same direction and the auxiliary regulatory blade are overlapped in the thickness direction gradually decreases; and wherein at the time of opening operation of the transmission aperture the transmission aperture is opened in a state in which the area where the quantity-of-light regulatory blade moved in the same direction and the auxiliary regulatory blade are overlapped in the thickness direction gradually increases.

Accordingly, the length in the movement direction of the quantity-of-light regulatory blades and the auxiliary regulatory blade which are moved in the same direction can be reduced as compare with the case in which the transmission aperture is opened and closed only by the pair of the quantity-of-light regulatory blades, whereby reduction in size regarding the image-capturing apparatus due to reduction in size regarding the quantity-of-light regulatory mechanism can be realized accordingly.

Also, reduction in size regarding the quantity-of-light regulatory mechanism can be realized, so the quantity-of-light regulatory mechanism can be readily disposed as to the lens barrel so as to not protrude outside, and interference regarding the layout as to other components can be avoided, whereby the flexibility of layout of the respective components to be disposed around the lens barrel can be improved.

Further, the quantity-of-light regulatory mechanism can be readily disposed as to the lens barrel so as to not protrude outside, so with the quantity-of-light regulatory mechanism, an opportunity to receive unexpected external force decreases, and accordingly, the malfunction of the quantity-of-light regulatory mechanism due to this external force can be prevented.

With the invention according to Claim 2, the turning arm is provided with an engaging protruding portion at a position between from the turning supporting point of the turning arm to the engaging pin, which is slidably engaged with the auxiliary regulatory blade, and the auxiliary regulatory blade is moved abreast by turning operation of the turning arm, whereby the number of components can be reduced, and also reduction in size due to reduction in layout space can be realized.

The quantity-of-light regulatory mechanism comprises: a pair of quantity-of-light regulatory blades, which are moved abreast in the direction where both blades are mutually separated to open or close a transmission aperture serving as the optical path of the image-capturing optical system which is disposed inside a lens barrel, for regulating quantity of light; a base article having the transmission aperture serving as the optical path of the image-capturing optical system for movably supporting the pair of quantity-of-light regulatory blades; a turning arm having an engagement pin to be engaged with each of the pair of quantity-of-light regulatory blades slidably for subjecting the pair of quantity-of-light regulatory blades to translational movement by being subjected to turning operation; a driving motor serving as a driving source for turning the turning arm; and an auxiliary regulatory blade for opening or closing the transmission aperture by being moved in the same direction as at least one of the pair of quantity-of-light regulatory blades; wherein at the time of obstructing operation of the transmission aperture the transmission aperture is obstructed in a state in which the area where the quantity-of-light regulatory blade moved in the same direction and the auxiliary regulatory blade are overlapped in the thickness direction gradually decreases; and wherein at the time of opening operation of the transmission aperture the transmission aperture is opened in a state in which the area where the quantity-of-light regulatory blade moved in the same direction and the auxiliary regulatory blade are overlapped in the thickness direction gradually increases.

Accordingly, the length in the movement direction of the quantity-of-light regulatory blades and the auxiliary regulatory blade which are moved in the same direction can be reduced as compare with the case in which the transmission aperture is opened and closed only by the pair of the quantity-of-light regulatory blades, whereby reduction in size regarding the quantity-of-light regulatory mechanism can be realized accordingly.

Also, reduction in size regarding the quantity-of-light regulatory mechanism can be realized, so the quantity-of-light regulatory mechanism can be readily disposed as to the lens barrel so as to not protrude outside, and interference regarding the layout as to other components can be avoided, whereby the flexibility of layout of the respective components to be disposed around the lens barrel can be improved.

Further, the quantity-of-light regulatory mechanism can be readily disposed as to the lens barrel so as to not protrude outside, so with the quantity-of-light regulatory mechanism, an opportunity to receive unexpected external force decreases, and accordingly, the malfunction of the quantity-of-light regulatory mechanism due to this external force can be prevented.

With the invention according to Claim 4, the turning arm is provided with an engaging protruding portion at a position between from the turning supporting point of the turning arm to the engaging pin, which is slidably engaged with the auxiliary regulatory blade, and the auxiliary regulatory blade is moved abreast by turning operation of the turning arm, whereby the number of components can be reduced, and also reduction in size due to reduction in layout space can be realized.

## Claims

1. An image-capturing apparatus comprising:
a lens barrel inside which an image-capturing optical system is disposed;
a pair of quantity-of-light regulatory blades, which are moved abreast in the direction where both blades are mutually separated to open or close a transmission aperture serving as the optical path of the image-capturing optical system, for regulating quantity of light;
a base article having said transmission aperture serving as the optical path of the image-capturing optical system for movably supporting said pair of quantity-of-light regulatory blades;
a turning arm having an engagement pin to be engaged with each of said pair of quantity-of-light regulatory blades slidably for subjecting said pair of quantity-of-light regulatory blades to translational movement by being subjected to turning operation;
a driving motor serving as a driving source for turning said turning arm; and
an auxiliary regulatory blade for opening or closing said transmission aperture by being moved in the same direction as at least one of said pair of quantity-of-light regulatory blades;
wherein at the time of obstructing operation of said transmission aperture said transmission aperture is obstructed in a state in which the area where the quantity-of-light regulatory blade moved in the same direction and said auxiliary regulatory blade are overlapped in the thickness direction gradually decreases;
and wherein at the time of opening operation of said transmission aperture said transmission aperture is opened in a state in which the area where the quantity-of-light regulatory blade moved in the same direction and said auxiliary regulatory blade are overlapped in the thickness direction gradually increases.

2. The image-capturing apparatus according to Claim 1, wherein said turning arm is provided with an engaging protruding portion at a position between from the turning supporting point of said turning arm to said engaging pin, which is slidably engaged with said auxiliary regulatory blade;
and wherein said auxiliary regulatory blade is moved abreast by turning operation of said turning arm.

3. A quantity-of-light regulatory mechanism comprising:
a pair of quantity-of-light regulatory blades, which are moved abreast in the direction where both blades are mutually separated to open or close a transmission aperture serving as the optical path of the image-capturing optical system which is disposed inside a lens barrel, for regulating quantity of light;
a base article having said transmission aperture serving as the optical path of the image-capturing optical system for movably supporting said pair of quantity-of-light regulatory blades;
a turning arm having an engagement pin to be engaged with each of said pair of quantity-of-light regulatory blades slidably for subjecting said pair of quantity-of-light regulatory blades to translational movement by being subjected to turning operation;
a driving motor serving as a driving source for turning said turning arm; and
an auxiliary regulatory blade for opening or closing said transmission aperture by being moved in the same direction as at least one of said pair of quantity-of-light regulatory blades;
wherein at the time of obstructing operation of said transmission aperture said transmission aperture is obstructed in a state in which the area where the quantity-of-light regulatory blade moved in the same direction and said auxiliary regulatory blade are overlapped in the thickness direction gradually decreases;
and wherein at the time of opening operation of said transmission aperture said transmission aperture is opened in a state in which the area where the quantity-of-light regulatory blade moved in the same direction and said auxiliary regulatory blade are overlapped in the thickness direction gradually increases.

4. The quantity-of-light regulatory mechanism according to Claim 3, wherein said turning arm is provided with an engaging protruding portion at a position between from the turning supporting point of said turning arm to said engaging pin, which is slidably engaged with said auxiliary regulatory blade;
and wherein said auxiliary regulatory blade is moved abreast by turning operation of said turning arm.
